(19) Europäisches Patentamt
European Patent Office
Office européen des brevets

(11) **EP 2 017 074 A2**

(12) **EUROPÄISCHE PATENTANMELDUNG**

(43) Veröffentlichungstag:
**21.01.2009 Patentblatt 2009/04**

(51) Int Cl.:
*B32B 15/01* (2006.01)          *B21C 37/09* (2006.01)
*C23C 2/12* (2006.01)          *F16L 9/02* (2006.01)

(21) Anmeldenummer: **08009935.1**

(22) Anmeldetag: **30.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **13.06.2007 EP 07011557**

(71) Anmelder: **TI Automotive (Heidelberg) GmbH**
**69118 Heidelberg (DE)**

(72) Erfinder:
• **Sausner, Andreas**
**60389 Frankfurt (DE)**
• **Stanzl, Gerhard**
**74915 Walbstadt (DE)**
• **Giemza, Jacek**
**76131 Karlsruhe (DE)**

(74) Vertreter: **Rohmann, Michael et al**
**Andrejewski - Honke**
**Patent- und Rechtsanwälte**
**Theaterplatz 3**
**45127 Essen (DE)**

(54) **Aluminiumbeschichtete Kraftfahrzeugrohrleitung aus Metall und Verfahren zur Herstellung einer Kraftfahrzeugrohrleitung mittels Schmelztauchbeschichten**

(57) Kraftfahrzeugrohrleitung mit einem Metallrohr, vorzugsweise Stahlrohr, wobei auf der Außenoberfläche des Metallrohres eine Aluminiumschicht mit einer Dicke von vorzugsweise 10-200 µm aufgebracht ist. Auf der Außenoberfläche der Aluminiumschicht ist eine Aluminiumoxidschicht mit einer Dicke von vorzugsweise 4-30 nm vorhanden, zur Verbesserung der Korrosionsbeständigkeit. Die Aluminiumoxidschicht bildet die äußere Schicht der Kraftfahrzeugrohrleitung. Die Aluminiumschicht wird mittels Schmelztauchbeschichten ("Hot-Dip coating") aufgebracht. Die Aluminiumoxidschichtdicke wird über die Temperatur des Aluminiums und der Sauerstoffkonzentration bei der Beschichtung eingestellt. Als Zwischenschicht kann eine Nickelschicht und eine Kupferschicht aufgebracht werden.

Fig.2

**Beschreibung**

Die Erfindung betrifft eine Kraftfahrzeugrohrleitung mit einem Metallrohr, wobei auf die Außenoberfläche des Metallrohres eine Aluminiumschicht aufgebracht ist. Die Erfindung betrifft fernerhin ein Verfahren zur Herstellung einer solchen Kraftfahrzeugrohrleitung. Die Kraftfahrzeugrohrteitung wird nachfolgend auch kurz als Rohrleitung bezeichnet.

Kraftfahrzeugrohrleitungen der vorstehend beschriebenen Art sind aus der Praxis grundsätzlich bekannt. Diese bekannten Kraftfahrzeugrohrleitungen weisen in der Regel zumindest eine auf der Aluminiumschicht angeordnete Kunststoffschicht auf, die normalerweise auch die äußere Schicht der Kraftfahrzeugrohrleitung bildet und unter anderem dem Korrosions" und Abrasionsschutz der Leitung dient. Viele der aus der Praxis bekannten Kraftfahrzeugrohrleitungen müssen in verhältnismäßig aufwendiger Weise gefertigt werden.

Der Erfindung liegt das technische Problem zugrunde eine Kraftfahrzeugrohrleitung der eingangs genannten Art anzugeben, die relativ einfach und wenig aufwendig herstellbar ist und die nichtsdestoweniger einen optimalen Korrosionsschutz gewährleistet. Der Erfindung liegt weiterhin das technische Problem zugrunde, ein entsprechendes Verfahren zur Herstellung einer solchen Kraftfahrzeugrohrleitung anzugeben.

Zur Lösung des technischen Problems lehrt die Erfindung eine Kraftfahrzeugrohrleitung mit einem Metallrohr, wobei auf die Außenoberfläche des Metallrohres eine Aluminiumschicht aufgebracht ist, wobei auf der Außenoberfläche der Aluminiumschicht eine Aluminiumoxidschicht angeordnet ist und wobei diese Aluminiumoxidschicht die äußere Schicht der Kraftfahrzeugrohrleitung bildet. Aluminiumoxid meint im Rahmen der Erfindung $Al_xO_y$ und insbesondere $Al_2O_3$.

Bei dem Metallrohr kann es sich um ein einwandiges Metallrohr (single wall tube) oder um ein doppelwandiges Metallrohr (double wall tube) handeln. Es liegt im Rahmen der Erfindung, dass es sich bei dem Metallrohr um ein Stahlrohr handelt. Das Stahlrohr wird zweckmäßigerweise durch Rollen eines Stahlbandes hergestellt, das einseitig oder beidseitig mit einer Schicht eines weiteren Metalles beschichtet sein kann. - Die Aluminiumschicht wird nach besonders bevorzugter Ausführungsform der Erfindung durch ein Hot-bip-Verfahren aufgebracht. Es liegt im Rahmen der Erfindung, dass die Aluminiumoxidschicht die äußere Schicht der Kraftfahrzeugrohrleitung ist. Das bedeutet insbesondere, dass auf die äußere Aluminiumoxidschicht zweckmäßigerweise keine zusätzliche Schicht bzw. Kunststoffschicht mehr aufgebracht ist.

Nach einer ersten bevorzugten Ausführungsform der Erfindung ist die Außenoberfläche des Metallrohres, insbesondere Stahlrohres eine unbeschichtete Metalloberfläche, insbesondere eine unbeschichtete Stahloberfläche. Dann wird die Aluminiumschicht unmittelbar und ohne Zwischenschaltung einer weiteren Schicht auf die Metalloberfläche bzw. Stahloberfläche des Metallrohres aufgebracht. Gemäß einer bevorzugten Ausführungsvariante handelt es sich bei dem Metallrohr um ein doppelt gerolltes Metallrohr/Stahlrohr (double wall tube). Dieses doppelt gerollte Rohr wird zweckmäßigerweise aus einem Metallband bzw. Stahlband hergestellt, das vorzugsweise nur einseitig mit Kupfer beschichtet ist. Zur Herstellung des Rohres erfolgt ein Zusammenrollen des Bandes und bevorzugt ein Verlöten der beiden Schichten des doppelt gerollten Rohres mit Hilfe der Kupferschicht. Dabei resultiert ein außenseitig unbeschichtetes Metallrohr/Stahlrohr, d. h. ein Metallrohr/Stahlrohr mit unbeschichteter äußerer Metalloberfläche/Stahloberfläche. Bei dieser ersten Ausführungsform der Erfindung wird die Aluminiumschicht unmittelbar auf die unbeschichtete Metalloberfläche/Stahloberfläche aufgebracht. Dabei kann es sich auch um die unbeschichtete Metallaußenseite/Stahlaußenseite eines einwandigen Rohres (single wall tube) handeln.

Gemäß einer zweiten bevorzugten Ausführungsform der Erfindung ist zwischen der Außenoberfläche des Metallrohres und der Aluminiumschicht eine Nikkelschicht angeordnet. Dabei wird die Nickelschicht zweckmäßigerweise auf die die Außenoberfläche des Metallrohres bildende unbeschichtete Metalloberfläche/ Stahloberfläche aufgebracht und vorzugsweise wird auf diese Nickelschicht dann unmittelbar die Aluminiumschicht aufgebracht. Das Aufbringen der Aluminiumschicht erfolgt auch hier bevorzugt nach dem Hot-Dip-Verfahren.

Gemäß einer bevorzugten Ausführungsform der Erfindung wird die Nickelschicht zunächst einseitig auf die unbeschichtete Metalloberfläche/Stahloberfläche eines Metallbandes bzw. Stahlbandes aufgebracht, das anschließend zu einem einwandigen oder doppelwandigen Metallrohr/Stahlrohr gerollt wird, so dass die Nickelschicht die Außenoberfläche des gerollten Rohres bildet. Es liegt im Rahmen der Erfindung, dass ein entsprechendes einwandiges Metallrohr/Stahlrohr längsnahtverschweißt wird. - Grundsätzlich kann die Nickelschicht auch auf die unbeschichtete Metalloberfläche/Stahloberfläche des zylinderförmigen Metallrohres/Stahlrohres aufgebracht werden. - Vorzugsweise wird auf die nickelbeschichtete Außenoberfläche des einwandigen oder doppelwandigen Metallrohres/Stahlrohres unmittelbar die Aluminiumbeschichtung aufgebracht und zwar bevorzugt mit dem Hot-Dip-Verfahren.

Wenn es sich nach einer Ausführungsvariante der Erfindung um ein doppelwandiges Metallrohr/Stahlrohr handelt, wird dieses vorzugsweise durch Rollen eines Metallbandes/Stahlbandes hergestellt, das empfohlenermaßen auf der einen Seite mit Kupfer beschichtet ist und zweckmäßigerweise auf der anderen Seite mit Nickel beschichtet ist. Es liegt dann im Rahmen der Erfindung, dass ein Zusammenrollen des Bandes und vorzugsweise ein Verlöten der beiden Schichten des doppelwandigen Metallrohres/Stahlrohres stattfindet, wobei auf der Außenoberfläche dieses doppelwandigen Metallrohres die Nickelbeschichtung angeordnet ist. Zweckmäßigerweise wird auf diese Nickelbeschichtung unmittelbar die Aluminiumbeschichtung aufgebracht und zwar vorzugsweise mit dem Hot-Dip-Verfahren.

Nach einer weiteren empfohlenen Ausführungsvariante ist auf der Außenoberfläche des Metallrohres eine Kupferschicht vorgesehen, so dass diese Kupferschicht zwischen Metallrohr und Aluminiumschicht angeordnet ist. Es liegt dabei im Rahmen der Erfindung, dass die Kupferschicht unmittelbar, d. h. ohne Zwischenschaltung einer weiteren Schicht, auf der Außenoberfläche des Metallrohres vorgesehen ist. Auch bei dieser Ausführungsvariante kann das Metallrohr einwandig oder doppelwandig ausgebildet sein. Vorzugsweise ist zwischen Kupferschicht und Aluminiumschicht eine Nickelschicht bzw. die vorstehend bereits erläuterte Nickelschicht angeordnet. Die Nickelschicht grenzt dabei zweckmäßigerweise unmittelbar an die Kupferschicht einerseits und unmittelbar an die Aluminiumschicht andererseits an, d. h. ohne Zwischenschaltung weiterer Schichten. Die Dicke der Kupferschicht beträgt vorzugsweise 50 bis 300 nm, bevorzugt 50 bis 200 nm, sehr bevorzugt 50 bis 150 nm und besonders bevorzugt 70 bis 130 nm. Wenn es sich bei dem Metallrohr um ein doppelwandiges Metallrohr/Stahlrohr handelt, wird dieses vorzugsweise durch Rollen eines Metallbandes/Stahlbandes hergestellt, das empfohlenermaßen auf beiden Seiten mit Kupfer beschichtet ist. Die Aluminiumbeschichtung wird auch bei der Ausführungsvariante mit auf der Außenoberfläche des Metallrohres aufgebrachter Kupferschicht vorzugsweise mit dem Hot-Dip-Verfahren aufgetragen.

Der Erfindung liegt die Erkenntnis zugrunde, dass die Aluminiumschicht, insbesondere die mit dem Hot-Dip-Verfahren aufgebrachte Aluminiumschicht sowohl auf einer unbeschichteten Stahloberfläche an der Außenseite des Metallrohres optimal haftet als auch auf einer mit einer Nickelbeschichtung versehenen Außenoberfläche des Metallrohres/Stahlrohres.

Wenn auf die Außenoberfläche des Metallrohres bzw. auf die auf der Außen-oberfläche angeordnete Kupferschicht eine Nickelschicht aufgebracht wird, beträgt die Dicke dieser Nickelschicht zweckmäßigerweise 0,2 bis 50 $\mu$m, vorzugsweise 0,2 bis 10 $\mu$m und bevorzugt 0,2 bis 5 $\mu$m. Nach einer besonders bevorzugten Ausführungsform der Erfindung ist die Dicke der Nickelschicht kleiner als 5 $\mu$m und sehr bevorzugt kleiner als 4 $\mu$m. Eine besonders empfohlene Ausführungsform der Erfindung ist dadurch gekennzeichnet, dass die Dicke der Nickelschicht 0,2 bis 3 $\mu$m, vorzugsweise 0,3 bis 2,5 $\mu$m und besonders bevorzugt 0,3 bis 1,5 $\mu$m beträgt.

Es liegt im Rahmen der Erfindung, dass die Dikke der Aluminiumschicht kleiner als 250 $\mu$m ist. Zweckmäßigerweise beträgt die Dicke der Aluminiumschicht 10 bis 200 $\mu$m, vorzugsweise 20 bis 180 $\mu$m, bevorzugt 25 bis 150 $\mu$m und sehr bevorzugt 30 bis 150 $\mu$m. Empfohlenermaßen liegt die Dicke der Aluminiumschicht im Bereich von 40 bis 150 $\mu$m, vorzugsweise 50 bis 150

$\mu$m, bevorzugt 80 bis 150 $\mu$m und besonders bevorzugt 90 bis 140 $\mu$m. Die Dicke der Aluminiumschicht meint im Übrigen die Dicke der metallischen Aluminiumschicht (ohne Aluminiumoxidschicht).

Erfindungsgemäß wird die Außenoberfläche der Kraftfahrzeugrohrleitung von einer Aluminiumoxidschicht gebildet. Es liegt dabei im Rahmen der Erfindung, dass sich die Aluminiumoxidschicht unmittelbar auf der Aluminiumschicht befindet und zwar ohne Zwischenschaltung weiterer Schichten. Zweckmäßigerweise beträgt die Dicke der Aluminiumoxidschicht 4 bis 30 nm, vorzugsweise 5 bis 25 nm und besonders bevorzugt 6 bis 20 nm. Aluminiumoxidschicht meint im Rahmen der Erfindung insbesondere eine Schicht die mehr als 20 Atom-% Sauerstoff enthält.

Nach empfohlener Ausführungsform der Erfindung beträgt die Rundheit der Außenkontur der Rohrleitung maximal 500 $\mu$m, vorzugsweise maximal 400 $\mu$m, bevorzugt maximal 300 $\mu$m und besonders bevorzugt maximal 200 $\mu$m. Es empfiehlt sich ganz besonders, dass die Rundheit der Rohrleitung maximal 170 $\mu$m beträgt. Die Rundheit der Außenkontur der Rohrleitung ist dabei definiert als die Durchmesserdifferenz zweier konzentrischer Kreise, von denen der eine der größtmögliche Innenkreis und der andere der kleinstmögliche Außenkreis ist, zwischen welchen Kreisen die Außenkontur der Rohrleitung vollständig aufgenommen ist. Mit anderen Worten müssen die Umfangslinien der Außenkontur aller Querschnitte der Rohrleitung vollständig in einer Toleranzzone liegen, die durch die beiden genannten konzentrischen Kreise gebildet wird. Die Einhaltung der vorstehend spezifizierten Rundheit der Außenkontur trägt überraschenderweise zur Lösung des technischen Problems und zur mechanischen Widerstandsfähigkeit der Rohrleitung bzw. ihres Schichtenaufbaus bei.

Nachfolgend meint die Außenschicht der Rohrleitung die aus der Aluminiumschicht und der Aluminiumoxidschicht gebildete Schicht bzw. Gesamtschicht. Empfohlenermaßen beträgt die Schichtdickenschwankung der Außenschicht maximal 100 $\mu$m, vorzugsweise maximal 80 $\mu$m, bevorzugt maximal 60 $\mu$m, sehr bevorzugt maximal 50 $\mu$m und besonders bevorzugt maximal 40 $\mu$m. Schichtdickenschwankung meint die Differenz zwischen einer maximalen Schichtdicke der Außenschicht und einer minimalen Schichtdicke der Außenschicht an einem Querschnitt der Rohrleitung. Die Einhaltung der vorstehend beschriebenen Schichtdickenschwankung hat sich im Hinblick auf die Lösung des technischen Problems überraschenderweise bewährt und auch im Hinblick auf die Haftfestigkeit der Schichten der Rohrleitung.

Eine besonders bevorzugte Ausführungsform der Erfindung ist dadurch gekennzeichnet, dass die mittlere Rauigkeit $R_a$ der Außenoberfläche der Rohrleitung zweckmäßigerweise weniger als 8 $\mu$m, vorzugsweise weniger als 7 $\mu$m, bevorzugt weniger als 6,8 $\mu$m, sehr bevorzugt weniger als 6,5 $\mu$m und besonders bevorzugt weniger als 6 $\mu$m beträgt. Die mittlere Rauigkeit $R_a$ ist

definiert als das arithmetische Mittel der Absolutbeträge der Ordinatenwerte des Rauigkeitsprofils (DIN EN ISO 4287). Nach sehr empfohlener Ausführungsform der Erfindung beträgt die maximale Rauigkeitshöhe $R_t$ der Außenoberfläche der Rohrleitung zweckmäßigerweise weniger als 50 μm, vorzugsweise weniger als 45 μm und bevorzugt weniger als 40 μm. Die maximale Rauigkeitshöhe $R_t$ ist dabei definiert als die Summe aus der Höhe der größten Profilspitze und der Tiefe des größten Profiltales des Rauigkeitsprofils innerhalb der Messstrecke (DIN EN ISO 4287). - Es liegt im Rahmen der Erfindung, dass die vorgenannten Rauigkeitswerte $R_a$ bzw. $R_t$ aus einer Raugkeitsmessung entlang des Rohrleitungsumfanges bestimmt werden. Zweckmäßigerweise rotiert bei der Rauigkeitsmessung die Rohrleitung unter einem Rauigkeitsmesstaster, der das Rauigkeitsprofil aufzeichnet. - Die vorstehend genannten Rauigkeitswerte bzw. Raulgkeitskennwerte haben sich für die Lösung des erfindungsgemäßen technischen Problems besonders bewährt.

Es empfiehlt sich, dass die Aluminiumschicht zumindest 85 Gew.-%, vorzugsweise zumindest 90 Gew.-%, bevorzugt zumindest 95 Gew.-% und sehr bevorzugt zumindest 98 Gew.-% Aluminium enthält. Es liegt dabei im Rahmen der Erfindung, dass die Aluminiumschicht aus einer Aluminiumlegierung mit den vorgenannten prozentualen Aluminiumanteilen besteht. Nach besonders bevorzugter Ausführungsform der Erfindung besteht die Aluminiumschicht aus einem Aluminium bzw. aus einer Aluminiumlegierung nach der Norm EN 573-3 aus Juli 2003 (Serien 1000 bis 8000). Es empfiehlt sich, dass das Aluminium bzw. die Aluminiumlegierung der Aluminiumschicht zumindest eine Komponente bzw. zumindest ein Element aus der Gruppe "Silizium, Eisen, Kupfer, Mangan, Magnesium, Chrom, Nickel, Zirkon, Bor, Bismut, Blei, Kobalt, Zink, Titan, Gallium, Vanadium" enthält. Eine sehr bevorzugte Ausführungsvariante der Erfindung ist dadurch gekennzeichnet, dass das Aluminium bzw. die Aluminiumlegierung der Aluminiumschicht Silizium und Eisen und bevorzugt zusätzlich Zink und/ oder Kupfer und/oder Mangan und/oder Magnesium und/ oder Titan enthält, wobei das Aluminium bzw. die Aluminiumlegierung zumindest 85Gew.-%, empfohlenermaßen zumindest 90 Gew.-%, bevorzugt zumindest 95 Gew.-% und besonders bevorzugt zumindest 99 Gew.-% Aluminium enthält.

Gemäß besonders bevorzugter Ausführungsform der Erfindung enthält das Aluminium bzw. die Aluminiumlegierung der Aluminiumschicht 0,05 bis 0,22 Gew.-% Silizium und 0,05 bis 0,27 Gew.-% Eisen. Vorzugsweise sind zusätzlich 0,02 bis 0,09 Gew.-% Zink enthalten. Das vorgenannte Aluminium bzw. die vorgenannte Aluminiumlegierung mit den aufgeführten prozentualen Anteilen an Silizium und Eisen und vorzugsweise Zink enthält zweckmäßigerweise zusätzlich 0,01 bis 0,04 Gew.-% Kupfer und/oder 0,01 bis 0,04 Gew.-% Mangan und/oder 0,01 bis 0,04 Gew.-% Magnesium und/oder 0,01 bis 0,04 Gew.-% Titan. Empfohlenermaßen sind in dem Aluminium bzw. in der Aluminiumlegierung außer dem Aluminium ausschließlich Silizium und Eisen sowie vorzugsweise Zink und zweckmäßigerweise Kupfer und/ oder Mangan und/oder Magnesium und/oder Titan enthalten. Gemäß dieser letztgenannten Ausführungsvariante können andere Komponenten jeweils lediglich in einem Anteil bis zu 0,03 Gew.-% enthalten sein. - Die vorstehend beschriebenen Zusammensetzungen des Aluminiums bzw. der Aluminiumlegierung haben sich im Hinblick auf die Lösung des erfindungsgemäßen technischen Problems besonders bewährt. Diese Ausführungsform bzw. diese Ausführungsformen bedingen einerseits einen hohen Korrosionswiderstand und andererseits auch eine hohe mechanische Widerstandsfähigkeit der Rohrleitung sowie eine überraschend hohe Haftfestigkeit des Schichtenverbundes.

Insbesondere wenn mit den vorstehend beschriebenen Zusammensetzungen gearbeitet wird, kann eine besonders hohe Haftfestigkeit der Aluminiumschicht erzielt werden. Der Erfindung liegt die Erkenntnis zugrunde, dass die Haftfestigkeit der Aluminiumschicht zweckmäßigerweise mit einer bestimmten Testmethode bestimmt werden sollte. Dazu wird bei einem linearen Stück der Rohrleitung bzw. bei einem im Wesentlichen linearen Stück der Rohrleitung die Außenschicht (Aluminiumschicht und Aluminiumoxidschicht) über den Umfang der Rohrleitung bis auf die Außenoberfläche des Metallrohres/Stahlrohres eingeschnitten. Anschließend wird die Rohrleitung im Bereich des Einschnittes um 180° bzw. in etwa um 180° gebogen, so dass sich der Einschnitt im Scheitelpunkt bzw. im Maximum des Biegehalbkreises befindet. Zweckmäßigerweise beträgt bei einem Außendurchmesser der Rohrleitung von 4 bis 5,5 mm der Biegeradius 7 bis 9 mm, insbesondere beträgt bei einem Außendurchmesser von 4,75 mm der Biegeradius 8 mm. Empfohlenermaßen liegt der Biegeradius bei einem Außendurchmesser der Rohrleitung von über 5,5 bis 6,5 mm zwischen 11 und 14 mm, insbesondere bei einem Außendurchmesser der Rohrleitung von 6 mm bei 12 mm. Bei einem Außendurchmesser der Rohrleitung von über 6,5 bis 8,5 mm beträgt der Biegeradius zweckmäßigerweise 15 bis 23 mm, insbesondere liegt er bei einem Außendurchmesser der Rohrleitung von 8 mm bei 19 mm. Empfohlenermaßen liegt der Biegeradius bei einem Außendurchmesser der Rohrleitung von über 8,5 bis 12 mm zwischen 23 und 31 mm, insbesondere bei einem Außendurchmesser von 10 mm bei 27 mm. - Nach besonders bevorzugter Ausführungsform der Erfindung wird der Biegeradius R nach der folgenden Formel in Abhängigkeit vom Rohraußendurchmesser x gewählt (Werte von R und x jeweils in mm):

$$R(x) = 0{,}121\,x^2 + 1{,}83x - 3{,}44{.}$$

Es liegt im Rahmen der Erfindung, dass die Rohrleitung für die Erfindung geeignet ist, wenn bei diesem Biegeversuch kein Abplatzen der Außenschicht im Bereich des Einschnittes bzw. am Biegehalbkreis stattfindet. Zweckmäßigerweise wird die Zusammensetzung der Aluminiumschicht entsprechend den oben aufgeführten Angaben so eingestellt, dass ein Abplatzen der Außenschicht bei diesem Biegeversuch nicht stattfindet. Eine gute Haftfestigkeit der Außenschicht bzw.

Aluminiumschicht bedingt auch eine hohe Korrosionswiderstandsfähigkeit der Rohrleitung.

Zur Lösung des technischen Problems lehrt die Erfindung auch ein Verfahren zur Herstellung einer Kraftfahrzeugrohrleitung, wobei auf die Außenoberfläche eines Metallrohres, vorzugsweise Stahlrohres eine Aluminiumschicht durch einen Hot-Dip-Prozess aufgebracht wird und wobei auf der Außenoberfläche der Aluminiumschicht eine Aluminiumoxidschicht erzeugt wird. Nach einer ersten Ausführungsvariante des erfindungsgemäßen Verfahrens wird die Aluminiumschicht unmittelbar auf die unbeschichtete Außenoberfläche des Metallrohres/Stahlrohres aufgebracht. Nach einer zweiten Ausführungsvariante des erfindungsgemäßen Verfahrens wird auf diese unbeschichtete Außenoberfläche des Metallrohres/Stahlrohres zunächst eine Nickelschicht aufgebracht und auf die Nickelschicht wird dann zweckmäßigerweise unmittelbar die Aluminiumschicht aufgebracht. Die Nickelschicht kann dabei nach einer Ausführungsform auf die unbeschichtete Außenoberfläche eines Metallbandes/Stahlbandes aufgebracht werden, welches Metallband/Stahlband dann zu einem einwandigen oder doppelwandigen Metallrohr/Stahlrohr gerollt wird und anschließend wird auf die Nickelschicht zweckmäßigerweise unmittelbar die Aluminiumschicht aufgebracht. Eine Ausführungsform des erfindungsgemäßen Verfahrens umfasst auch das oben erläuterte Aufbringen einer Kupferschicht auf die unbeschichtete Außenoberfläche des Metallrohres/Stahlrohres oder auf ein Metallband/Stahlband, das dann zu einem einwandigen oder doppelwandigen Metallrohr/Stahlrohr gerollt wird.

Es liegt im Rahmen der Erfindung, dass die Abkühlung der durch den Hot-Dip-Prozess aufgebrachten Aluminiumschicht mit der Maßgabe durchgeführt wird, dass eine Aluminiumoxidschicht mit einer Dicke von 4 bis 30 nm, vorzugsweise von 5 bis 25 nm und besonders bevorzugt von 6 bis 20 nm erzeugt wird. Das Aluminium reagiert bei der Erzeugung der Aluminiumoxidschicht mit dem in der jeweiligen Atmosphäre vorhandenen Sauerstoff zum Aluminiumoxid $Al_xO_y$. Die Schichtdicke der Aluminiumoxidschicht ergibt sich dabei aus den Verfahrensparametern, insbesondere aus der Temperatur des Aluminiums und der Sauerstoffkonzentration der Atmosphäre. Es liegt im Rahmen der Erfindung, dass die Temperatur des Aluminiums und/oder die Sauerstoffkonzentration der Atmosphäre so eingestellt werden, dass sich die oben genannten Schichtdicken für die Aluminiumoxidschicht ergeben.

Der Erfindung liegt zunächst die Erkenntnis zugrunde, dass eine erfindungsgemäße Kraftfahrzeugrohrleitung auf verhältnismäßig einfache und wenig aufwendige Weise hergestellt werden kann. Nichtsdestoweniger weist die erfindungsgemäße Kraftfahrzeugrohrleitung eine ausgezeichnete Korrosionsbeständigkeit auf. Ein sehr wesentlicher Vorteil der erfindungsgemäßen Kraftfahrzeugrohrleitung besteht darin, dass die Rohrleitung im Gegensatz zu einem kunststoffbeschichteten Rohr auch bei höheren Temperaturen eingesetzt werden kann und zwar insbesondere auch bei Temperaturen oberhalb der Erweichungspunkte von entsprechenden Kunststoffen. Bei solchen Temperaturen sind die kunststoffbeschichteten Rohrleitungen nicht einsatzfähig. Weiterhin zeichnet sich die erfindungsgemäße Kraftfahrzeugrohrleitung auch durch eine überraschend hohe mechanische Widerstandsfähigkeit aus. Besonders bewährt haben sich insbesondere erfindungsgemäß aus doppelwandigen Rohren hergestellte Kraftfahrzeugrohrleitungen. Trotz der relativ einfachen Herstellungsweise werden nichtsdestoweniger beachtliche Vorteile im Vergleich zu anderen aus dem Stand der Technik bekannten Kraftfahrzeugrohrleitungen erreicht. Aufgrund des geringen Herstellungsaufwandes ist eine erfindungsgemäße Kraftfahrzeugrohrleitung auch verhältnismäßig kostengünstig produzierbar.

Nachfolgend wird die Erfindung anhand eines Ausführungsbeispiels näher erläutert: Aus einem auf der einen Seite mit Kupfer und auf der anderen Seite mit Nickel beschichteten Stahlband wird ein doppelwandiges Stahlrohr gerollt (double wall tube) und zwar so, dass die Nickelbeschichtung sich auf der Außenoberfläche des doppelwandigen Stahlrohres befindet. Es erfolgt zweckmäßigerweise ein Verlöten der beiden Rohrwände mit Hilfe der Kupferbeschichtung. Die Dicke der außenseitigen Nickelschicht beträgt vorzugsweise 0,5 bis 1,5 μm. Anschließend wird dieses doppelwandige nickelbeschichtete Stahlrohr im Rahmen eines Hot-Dip-Prozesses mit einer Aluminiumbeschichtung überzogen. Die Dicke der Aluminiumschicht beträgt dabei 30 bis 200 μm. Man lässt das Rohr mit der. Aluminiumbeschichtung mit der Maßgabe auskühlen, dass sich auf der Rohraußenseite bzw. auf der Außenseite der Aluminiumschicht eine Aluminiumoxidschicht bildet. Das Verfahren wird zweckmäßigerweise so geführt, dass die Dicke der Aluminiumoxidschicht 4 bis 30 nm beträgt, vorzugsweise 5 bis 25 nm. Die Rundheit dieser Rohrleitung beträgt empfohlenermaßen maximal 150 μm. Zweckmäßigerweise beträgt die Schichtdickenschwankung der Außenschicht maximal 40 μm. Es empfiehlt sich, dass die mittlere Rauigkeit $R_a$ der Außenoberfläche der Rohrleitung weniger als 6 μm beträgt. Vorzugsweise hat die maximale Rauigkeitshöhe $R_t$ der Außenoberfläche der Rohrleitung einen Wert kleiner 40 μm. Empfohlenermaßen wird ein Aluminium EN AW-1070 A gemäß EN 573-3 (2003) für die Aluminiumschicht eingesetzt. Zweckmäßigerweise weist das Aluminium der Aluminiumschicht einen Aluminiumanteil von mindestens 99,5 Gew.-%, bevorzugt von 99,7 Gew.-% auf. Dieses Aluminium enthält empfohlenermaßen 0,05 bis 0,22 Gew.-% Silizium, 0,05 bis 0,27 Gew.-% Eisen, 0,02 bis 0,09 Gew.-% Zink, 0,01 bis 0,04 Gew.-% Kupfer, 0,01 bis 0,04 Gew.-% Mangan, 0,01 bis 0,04 Gew.-% Magnesium und 0,01 bis 0,04 Gew.-% Titan.

Nachfolgend wird die Erfindung anhand einer ein Ausführungsbeispiel darstellenden Zeichnung näher erläutert. Es zeigen in schematischer Darstellung:

Fig. 1 einen Schnitt durch eine erfindungsgemäße Kraftfahrzeugrohrleitung in einer ersten Ausführungsform und

Fig. 2 den Gegenstand nach Fig. 1 in einer zweiten Ausführungsform und

Fig. 3 die erfindungsgemäße Kraftfahrzeugrohrleitung im Biegeversuch.

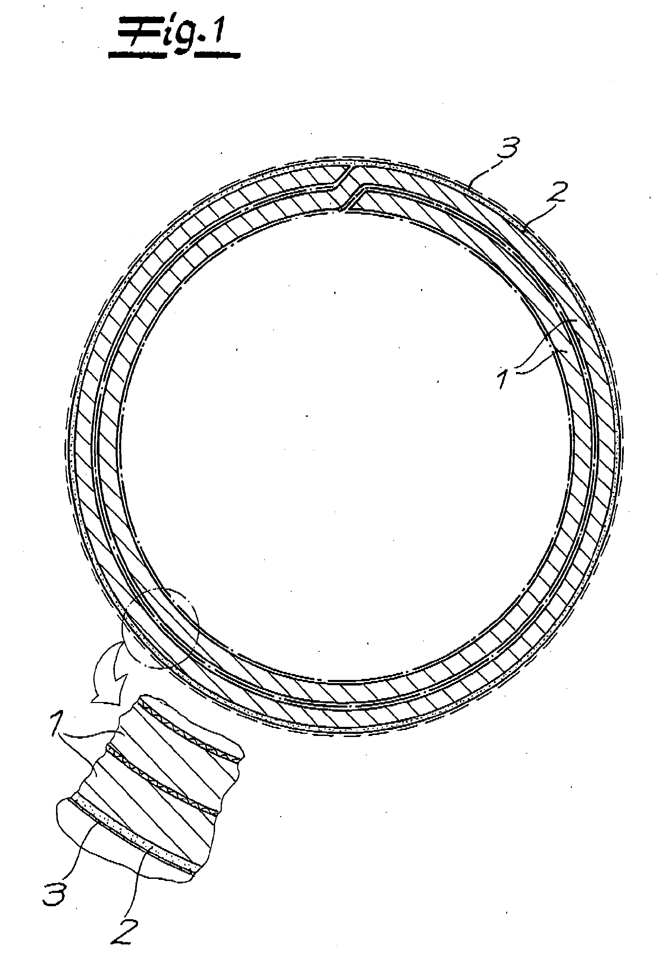

In der ersten Ausführungsform nach Fig. 1 ist auf die zunächst unbeschichtete Außenoberfläche eines doppelwandigen Stahlrohres 1 eine Aluminiumschicht 2 aufgebracht worden. Das Aufbringen der Aluminiumschicht 2 erfolgt dabei zweckmäßigerweise nach dem Hot-Dip-Prozess. Auf der Aluminiumschicht 2 ist unmittelbar eine Aluminiumoxidschicht 3 angeordnet, die die Außenoberfläche der Kraftfahrzeugrohrleitung bildet.

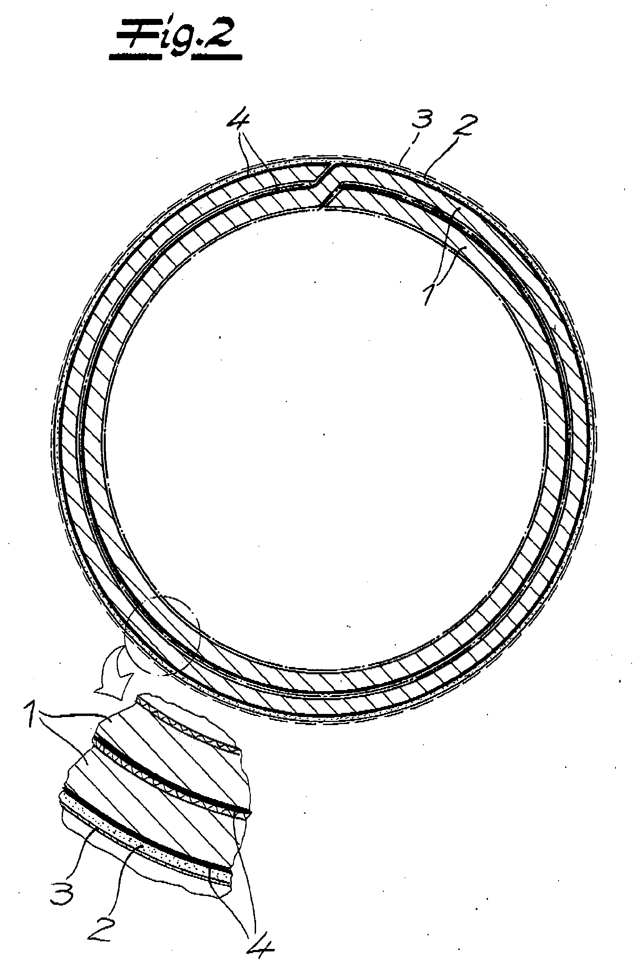

Bei der zweiten Ausführungsform gemäß Fig. 2 ist auf die Außenoberfläche des doppelwandigen Stahlrohres 1 zunächst eine Nickelschicht 4 aufgebracht. Auf dieser Nickelschicht 4 ist die Aluminiumschicht 2 angeordnet, die auch hier zweckmäßiger weise mit dem Hot-Dip-Prozess aufgebracht wird. An die Aluminiumschicht 2 schließt außenseitig die Aluminiumoxidschicht 3 an, die auch im Ausführungsbeispiel nach Fig. 2 die Außenoberfläche der Kraftfahrzeugrohrleitung bildet. Bei der Herstellung des doppelwandigen Stahlrohres 1 nach Fig. 2 wird ein auf einer Seite bzw. Oberfläche mit Nickel beschichtetes Stahlband eingesetzt, das dann zu dem doppelwandigen Stahlrohr 1 gerollt wird. Bei dieser Ausführungsform kann zwischen der Außenoberfläche des Stahlrohres 1 und der Nickelschicht 4 auch noch eine in der Fig. 2 nicht dargestellte Kupferschicht zwischengeschaltet sein.

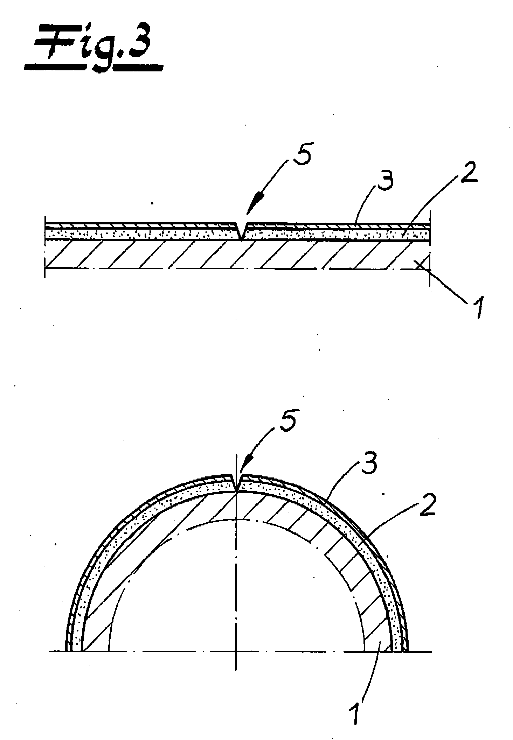

Fig. 3 veranschaulicht einen bevorzugten Biegeversuch der Erfindung. Im oberen Teil der Fig. 3 ist ein lineares Rohrleitungsstück eines Stahlrohres 1 dargestellt. In die Außenschicht (Aluminiumschicht 2 und Aluminiumoxidschicht 3) ist über den Umfang des Stahlrohres 1 ein Einschnitt 5 eingebracht, der gerade bis zur Außenoberfläche des Stahlrohres 1 reicht. Anschließend wird das Stahlrohr 1 um 180° gebogen, wie es im unteren Teil der Fig. 3 dargestellt ist. Der Einschnitt 5 soll sich nach dem Biegen im Scheitelpunkt bzw. im Maximum des Biegehalbkreises befinden. Der Biegeradius wird dabei zweckmäßigerweise in Abhängigkeit von dem Außendurchmesser der Rohrleitung gewählt. Das wurde weiter oben näher spezifiziert. Im unteren Teil der Fig. 3 ist erkennbar, dass keine Abplatzungen der Außenschicht von dem Stahlrohr 1 stattgefunden haben und dieses Stahlrohr 1 somit für den erfindungsgemäßen Einsatz in vorteilhafter Weise geeignet ist.

**Patentansprüche**

1. Kraftfahrzeugrohrleitung mit einem Metallrohr, wobei auf die Außenoberfläche des Metallrohres eine Aluminiumschicht (2) aufgebracht ist, wobei auf der Außenoberfläche der Aluminiumschicht (2) eine Aluminiumoxidschicht (3) vorhanden ist und wobei diese Aluminiumoxidschicht (3) die äußere Schicht der Kraftfahrzeugrohrleitung ist.

2. Kraftfahrzeugrohrleitung nach Anspruch 1, wobei die Außenoberfläche des Metallrohres, insbesondere Stahlrohres eine unbeschichtete Metalloberfläche, insbesondere Stahloberfläche ist.

3. Kraftfahrzeugrohrleitung nach Anspruch 1, wobei zwischen der Außenoberfläche des Metallrohres und der Aluminiumschicht (2) eine Nickelschicht (4) angeordnet ist.

4. Kraftfahrzeugrohrleitung nach einem der Ansprüche 1 bis 3, wobei zwischen der Außenoberfläche des Metallrohres und der Aluminiumschicht (2) eine Kupferschicht angeordnet ist, wobei die Dicke der Kupferschicht 50 bis 300 nm, vorzugsweise 50 bis 200 nm, sehr bevorzugt 50 bis 150 nm und besonders bevorzugt 70 bis 130 nm beträgt.

5. Kraftfahrzeugrohrleitung nach einem der Ansprüche 3 oder 4, wobei die Nickelschicht (4) zwischen Kupferschicht und Aluminiumschicht (2) angeordnet ist und unmittelbar an die Kupferschicht einerseits und unmittelbar an die Aluminiumschicht (2) andererseits angrenzt.

6. Kraftfahrzeugrohrleitung nach einem der Ansprüche 3 bis 5, wobei die Dicke der Nickelschicht 0,2 bis 50 $\mu$m, vorzugsweise 0,2 bis 10 $\mu$m und bevorzugt 0,2 bis 5 $\mu$m beträgt.

7. Kraftfahrzeugrohrleitung nach einem der Ansprüche 1 bis 6, wobei die Dicke der Aluminiumschicht (2) 10 bis 200 $\mu$m, vorzugsweise 20 bis 180 $\mu$m und bevorzugt 25 bis 150 $\mu$m beträgt.

8. Kraftfahrzeugrohrleitung nach einem der Ansprüche 1 bis 7, wobei die Dicke der Aluminiumoxidschicht (3) 4 bis 30 nm, vorzugsweise 5 bis 25 nm, und bevorzugt 6 bis 20 nm beträgt.

9. Kraftfahrzeugrohrleitung nach einem der Ansprüche 1 bis 8, wobei die Rundheit der Außenkontur der Rohrleitung maximal 500 $\mu$m, vorzugsweise maximal 400 $\mu$m, bevorzugt maximal 300 $\mu$m und beson-

ders bevorzugt maximal 200 $\mu$m beträgt.

10. Kraftfahrzeugrohrleitung nach einem der Ansprüche 1 bis 9, wobei die Schichtdickenschwankung der Außenschicht maximal 100 $\mu$m, vorzugsweise maximal 80 $\mu$m, bevorzugt maximal 60 $\mu$m, sehr bevorzugt maximal 50 $\mu$m und besonders bevorzugt maximal 40 $\mu$m beträgt.

11. Kraftfahrzeugrohrleitung nach einem der Ansprüche 1 bis 10, wobei die mittlere Rauigkeit $R_a$ der Außenoberfläche der Rohrleitung weniger als 8 $\mu$m, vorzugsweise weniger als 7 $\mu$m, bevorzugt weniger als 6,8 $\mu$m, sehr bevorzugt weniger als 6,5 $\mu$m und besonders bevorzugt weniger als 6 $\mu$m beträgt.

12. Kraftfahrzeugrohrleitung nach einem der Ansprüche 1 bis 11, wobei die maximale Rauigkeitshöhe $R_t$ der Außenoberfläche der Rohrleitung weniger als 50 $\mu$m, vorzugweise weniger als 45 $\mu$m und bevorzugt weniger als 40 $\mu$m beträgt.

13. Kraftfahrzeugrohrleitung nach einem der Ansprüche 1 bis 12, wobei die Aluminiumschicht (2) zumindest 95 Gew.-% Aluminium, vorzugsweise zumindest 98 Gew.-% Aluminium sowie Silizium und/oder Eisen enthält.

14. Kraftfahrzeugrohrleitung nach Anspruch 13, wobei die Aluminiumschicht (2) zusätzlich Kupfer und/oder Zink sowie vorzugsweise Mangan und/oder Magnesium enthält.

15. Verfahren zur Herstellung einer Kraftfahrzeugrohrleitung, wobei auf die Außenoberfläche eines Metallrohres, vorzugsweise Stahlrohres, eine Aluminiumschicht (2) durch einen Hot-Dip-Prozess aufgebracht wird und wobei die Abkühlung der durch den Hot-Dip-Prozess aufgebrachten Aluminiumschicht mit der Maßgabe durchgeführt wird, dass auf der Außenoberfläche der Aluminiumschicht eine Aluminiumoxidschicht mit einer Dicke von 4 bis 30 nm, vorzugsweise 5 bis 25 nm und bevorzugt 6 bis 20 nm resultiert.

*Fig.1*

# Fig.2

# Fig.3